Europäisches Patentamt

European Patent Office

Office européen des brevets

(11) Numéro de publication: **0 278 198 B1**

(12) **FASCICULE DE BREVET EUROPEEN**

(45) Date de publication du fascicule du brevet:
19.09.90

(21) Numéro de dépôt: **87420354.0**

(22) Date de dépôt: **28.12.87**

(51) Int. Cl.⁵: **B60J 7/06**

(54) Moyens de support et de guidage d'une bâche repliable.

(30) Priorité: **26.01.87 FR 8701215**

(43) Date de publication de la demande:
**17.08.88 Bulletin 88/33**

(45) Mention de la délivrance du brevet:
**19.09.90 Bulletin 90/38**

(84) Etats contractants désignés:
**AT BE CH DE ES FR GB GR IT LI LU NL SE**

(56) Documents cités:
**CH-A- 579 997**
**FR-A- 2 236 390**
**FR-A- 2 415 552**
**GB-A- 2 145 681**
**US-A- 3 942 830**

(73) Titulaire: **Société Anonyme dite : "S.A. BACHES REYNAUD", 20 route de Branges, F-71500 Louhans(FR)**

(72) Inventeur: **Kuhn, Jean-Claude, rue des Primevères, F-69740 Genas(FR)**
Inventeur: **Mourreau, François, Le Biez Priay, F-01160 Pont d'Ain(FR)**

(74) Mandataire: **Maureau, Pierre et al, Cabinet GERMAIN & MAUREAU B.P. 3011, F-69392 Lyon Cédex 03(FR)**

ACTORUM AG

## Description

La présente invention concerne des moyens de support et de guidage d'une bâche repliable.

Actuellement, une bâche repliable pour couverture de structures mobiles telles que des véhicules de transport, est supportée par des traverses en forme d'arceaux ou non, dont au moins certaines sont supportées, à chacune de leurs extrémités, par un chariot dont les galets sont mobiles sur un rail horizontal les deux rails supportant et guidant les deux chariots de chaque traverse étant disposés parallèlement l'un à l'autre et à une distance l'un de l'autre correspondant à la longueur d'une traverse, tandis que des organes auxiliaires sont éventuellement prévus pour soulever chaque pli de la bâche entre chaque traverse, lors de son repliage.

Dans le cas de véhicules de transport dont la hauteur hors tout est limitée par un gabarit imposé par la réglementation, il est intéressant, pour obtenir la hauteur de chargement la plus grande possible, que la hauteur d'encombrement du rail soit la plus réduite possible.

Certains constructeurs ont ainsi été amenés à imaginer des profilés spéciaux aptes à loger les galets des chariots mais qui sont, en raison même de leur originalité, d'un prix de revient très élevé.

Par le brevet GB-2 145 681, on connaît des moyens de support et de guidage d'une bâche repliable pour véhicule utilitaire comportant, de chaque côté du véhicule, deux rails longitudinaux servant au guidage des moyeux à billes dont est équipée chaque extrémité des arceaux mobiles supportant la bâche. Chaque arceau comporte donc quatre moyeux à billes permettant son déplacement entre la position développée et la position repliée de la bâche.

Cette disposition exige donc la présence de quatre rails et, par conséquent, l'adaptation, sur ces rails, de quatre moyeux à billes pour chaque arceau. Il faut noter aussi que les quatre rails nécessaires dans cet exemple sont rapportés sur la carrosserie du véhicule et engendrent un encombrement qui diminue le volume de chargement du véhicule.

Par le brevet US 3 942 830, on connaît des moyens de support et de guidage pour bâche repliable de couverture de structure mobile selon lesquels la bâche est supportée par des traverses, en forme d'arceaux ou non, auxquelles elle est fixée par des brides rivetées ou boulonnées, dont au moins certaines sont supportées, à chacune de leurs extrémités, par un chariot dont les organes de roulement sont mobiles sur un rail horizontal, les deux rails qui supportent et guident les deux chariots de chaque traverse qui en est équipée, étant disposés parallèlement l'un à l'autre et à une distance l'un de l'autre correspondant à la longueur d'une traverse, ces rails étant constitués essentiellement par un corps cylindrique de section transversale circulaire, chaque chariot prévu à chaque extrémité d'une traverse étant équipée d'au moins deux jeux d'éléments de roulement disposés autour du corps cylindrique constituant le rail considéré, de telle sorte que leurs plans médians soient orientés radialement par rapport au corps cylindrique et décalés l'un par rapport à l'autre de manière à envelopper ce corps cylindrique sur un arc de cercle supérieur à 180°C, chaque chariot étant immobilisé en rotation par rapport à l'axe longitudinal de son rail par l'engagement, sur l'autre rail, du chariot associé de la même traverse.

Cependant, dans les moyens connus par ce brevet US, pour son guidage par le rail correspondant, les éléments de roulements sont constitués par des roulettes possédant une gorge au profil de la partie de périphérie du rail concernée par cette poulie, de sorte que les éléments de roulement de ce chariot sont d'un coût élevé.

La présente invention vise à remédier à ces inconvénients. A cet effet, dans les moyens de support et de guidage d'une bâche repliable qu'elle concerne, et qui est du type précité, chaque corps cylindrique constituant un rail est lui-même constitué par un profilé tubulaire, chaque élément de roulement de chaque chariot est constitué par un galet, chaque jeu d'éléments de roulement de chaque chariot comporte au moins trois galets et, en outre, d'une part, chaque extrémité d'un arceau d'extrémité arrière est supportée, par le chariot lui correspondant, par l'intermédiaire d'un bras articulé permettant de le faire basculer vers le haut et en direction de l'avant du véhicule, sur une course angulaire de l'ordre de 90° et, d'autre part, cet arceau porte un bandeau qui, lorsqu'il est en position normale abaissée, est sensiblement vertical et coiffe la traverse arrière fixe de la carrosserie du véhicule.

Avantageusement, chaque rail de guidage constitue l'un des longerons supérieurs latéraux de cette structure.

De préférence, il est prévu, sur chaque chariot, deux jeux de quatre galets.

Si les conditions d'utilisation l'exigent, notamment en cas de grande longueur de la surface à couvrir, au profilé tubulaire de section circulaire transversale est associé un profilé de renfort de section transversale rectangulaire aplatie, pleine ou tubulaire, fixé, par l'un de ses petits côtés et par soudure ou de toute autre manière appropriée, à la génératrice inférieure du profilé tubulaire et de manière à ce que son plan médian soit orienté verticalement et radialement vers le bas par rapport au profilé tubulaire.

La présence de ce profilé de renfort peut, en outre, être mise à profit pour la fixation d'autres organes accessoires tels que, par exemple, des rails pour chariots d'éléments latéraux de bâche.

Cette disposition assure une excellente étanchéité à l'intérieur de la structure mobile en position de fermeture de la bâche.

Avantageusement, d'une part, à au moins l'un des bras articulés supportant l'arceau d'extrémité arrière est associé un ressort de rappel en position relevée, et, d'autre part, l'arceau basculant porte, de préférence dans sa partie centrale, un crochet destiné à s'engager, en position abaissée de cet arceau, dans le cran d'un verrou en forme de levier à rappel élastique porté par la traverse arrière fixe de la structure et manoeuvrable depuis le sol, par exemple à l'aide d'une perche, pour être pivoté en position de déverrouillage.

Suivant encore une autre caractéristique de l'invention, pour que le crochet s'engage de façon sûre dans le cran du verrou, l'arceau basculant porte, à chacune de ses extrémités et au droit de chaque profilé tubulaire, un gousset présentant une rainure de centrage, les rampes des deux goussets, qui présentent des pentes inverses, étant destinées, par leur engagement sur le rail leur correspondant, à assurer le centrage de cet arceau basculant en fin de basculement en position basse.

De toute façon, l'invention sera bien comprise à l'aide de la description qui suit, en référence au dessin schématique annexé représentant, à titre d'exemple non limitatif, une forme d'exécution de ces moyens:

Figure 1 en est une vue de face en élévation;

Figure 2 est, à échelle agrandie, une vue en coupe transversale de l'un des rails de guidage d'un chariot à proximité de ce chariot;

Figure 3 est une vue en coupe suivant III-III de figure 2 du chariot seul;

Figures 4 et 5 sont des vues partielles en perspective montrant un agencement particulier de l'arceau arrière des moyens de l'invention, dans le cas de leur application au support et au guidage d'une bâche de véhicule utilitaire, en position, respectivement, basse d'utilisation et relevée de chargement;

Figure 6 est une vue partielle de face en élévation de l'arceau arrière des figures 4 et 5.

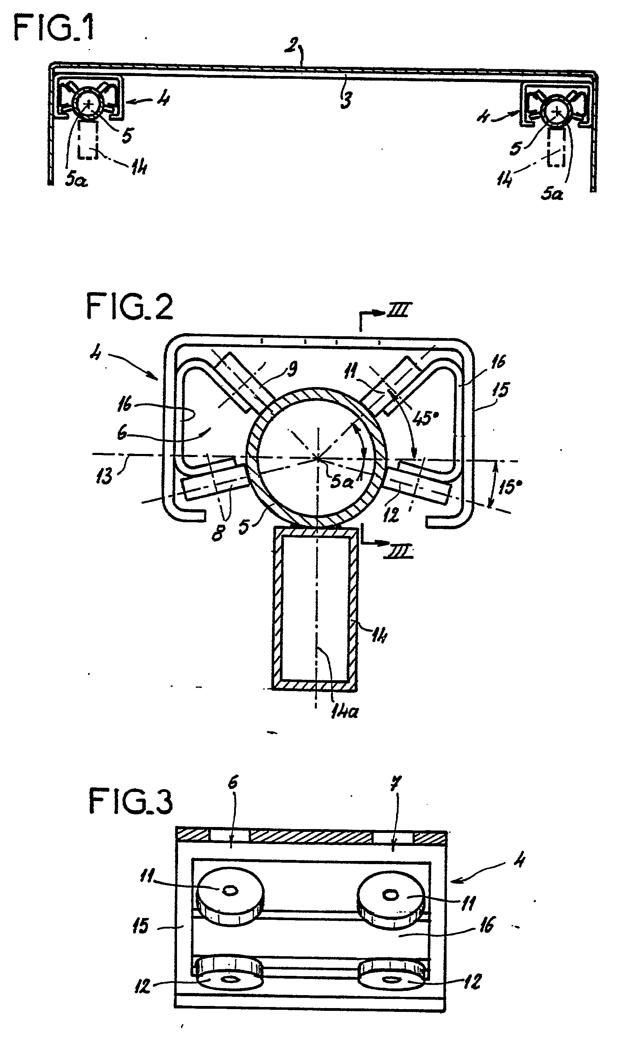

Comme le montre notamment la figure 1, les moyens de l'invention sont des moyens de support et de guidage d'une bâche 2 destinée à constituer l'élément de couverture d'une structure rectangulaire déterminée telle que, par exemple, la carrosserie d'un véhicule utilitaire. Ces moyens sont du type comportant une pluralité de traverses 3 en forme d'arceaux ou non, auxquelles la bâche 2 est fixée, de manière connue en soi, par des brides rivetées ou boulonnées non visibles sur le dessin, dont la longueur correspond au moins à la largeur de la surface à couvrir et dont chaque extrémité d'au moins certaines d'entre elles est équipée d'un chariot 4 mobile sur un rail horizontal 5. Les deux rails 5 supportant les chariots 4 sont évidemment disposés parallèlement l'un à l'autre, le long de deux côtés opposés de la surface à couvrir, la longueur des traverses 3 correspondant évidemment à l'écartement des rails 5 qui sont disposés parallèlement à l'axe longitudinal du véhicule, le long du bord supérieur des ridelles latérales de sa surface de chargement. Ces deux rails 5 constituent les longerons latéraux supérieurs de la carrosserie de ce véhicule.

Comme le montre notamment la figure 2, chaque rail 5 est constitué par un profilé tubulaire de section circulaire et chaque chariot 4 comporte deux jeux 6, 7 de quatre galets 8, 9, 11 et 12 disposés autour du profilé 5 de telle sorte que leurs plans médians soient orientés radialement par rapport au profilé 5 et décalés angulairement les uns par rapport aux autres pour envelopper ce profilé tubulaire 5 sur un arc de cercle supérieur à 180°, et à s'opposer ainsi à tout déplacement du chariot 4 dans une direction autre que la direction longitudinale du profilé 5.

Comme le montre le dessin, les axes de rotation des quatre galets 8, 9, 11 et 12 d'un même jeu 6 ou 7 sont situés dans un même plan diamétral du profilé tubulaire 5 correspondant.

Dans l'exemple illustré sur le dessin, les galets 8, 9, 11 et 12 d'un chariot 4 enveloppent le profilé tubulaire 5 sur 210° puisque les plans médians des galets 9 et 11 font, avec le plan horizontal 13 passant par l'axe longitudinal 5a du profilé tubulaire 5 considéré et situé en dessous d'eux, un angle de 45°, tandis que les plans médians des galets 8 et 12 font, avec ce même plan horizontal 13 situé au-dessus d'eux, un angle de 15°.

Naturellement, la répartition angulaire des galets 8, 9, 11 et 12 autour du profilé tubulaire 5 qui leur sert de rail de guidage n'est pas en mesure d'empêcher une rotation du chariot 4 correspondant autour de l'axe 5a de ce profilé tubulaire 5 mais on conçoit aisément que cette rotation est empêchée par la liaison de ce chariot 4 à la traverse 3 qui le relie mécaniquement à l'autre chariot 4 dont est équipée l'autre extrémité de cette traverse 3 et qui est lui-même engagé sur l'autre profilé tubulaire 5.

Le rail 5, qui est constitué par un profilé tubulaire du commerce, est d'un prix de revient très peu élevé puisqu'il ne nécessite aucune opération destinée à le transformer de manière spécifique à son usage de support et de guidage d'une pluralité de chariots 4. Cependant, dans le cas où cela serait rendu nécessaire par une longueur importante de la surface à couvrir, surtout si l'on veut éviter la nécessité de prévoir des piliers intermédiaires, au profilé tubulaire 5 peut être associé un profilé plat de section transversale rectangulaire aplatie, tubulaire ou plein, 14. Ce profilé 14 est fixé au profilé 5 par l'un de ses petits côtés, par soudure ou de toute autre manière, à la génératrice inférieure du profilé 5 et de manière à ce que son plan médian 14a soit orienté radialement par rapport au profilé 5 et dirigé verticalement vers le bas.

Pour ne pas gêner les déplacements des chariots 4 sur le profilé 5 ni le repliage de la bâche 2 supportée par les traverses 3 et les chariots 4, l'épaisseur du profilé de renfort 14 est choisie inférieure au diamètre du profilé 5.

Même lorsque le profilé 5 est équipé d'un profilé de renfort 14, le rail ainsi obtenu est d'un prix de revient extrêmement peu élevé.

Dans le même but de maintien de son prix de revient à une faible valeur, chaque chariot 4 est constitué tout simplement par un tronçon de profilé de section transversale en U renversé 15, dont chaque aile radiale porte, sur sa face interne, un tronçon de profilé auxiliaire 16 de section transversale sensiblement en U et fixé, par son âme, à la face interne de l'aile latérale considérée du profilé 15.

Chaque aile latérale d'un profilé auxiliaire 16 qui est destiné à supporter les axes de deux galets se correspondant des jeux 6 et 7 de galets 8, 9, 11 et 12, forme, avec l'âme 16, l'angle correspondant à l'inclinaison désirée pour le plan médian du galet considéré par rapport au plan horizontal 13.

Comme cela ressort nettement de l'examen de la figure 2, chaque chariot 4 est d'une construction extrêmement simple et, par conséquent, d'un prix de revient très peu élevé.

Il faut noter que, lorsque la structure de l'invention constitue la carrosserie d'un véhicule utilitaire, comme cela est connu en soi, l'arceau disposé à l'extrémité avant de la carrosserie du véhicule est fixe tandis que l'arceau disposé à l'arrière de cette carrosserie est mobile et sa course est évidemment supérieure à celle de tous les arceaux intermédiaires.

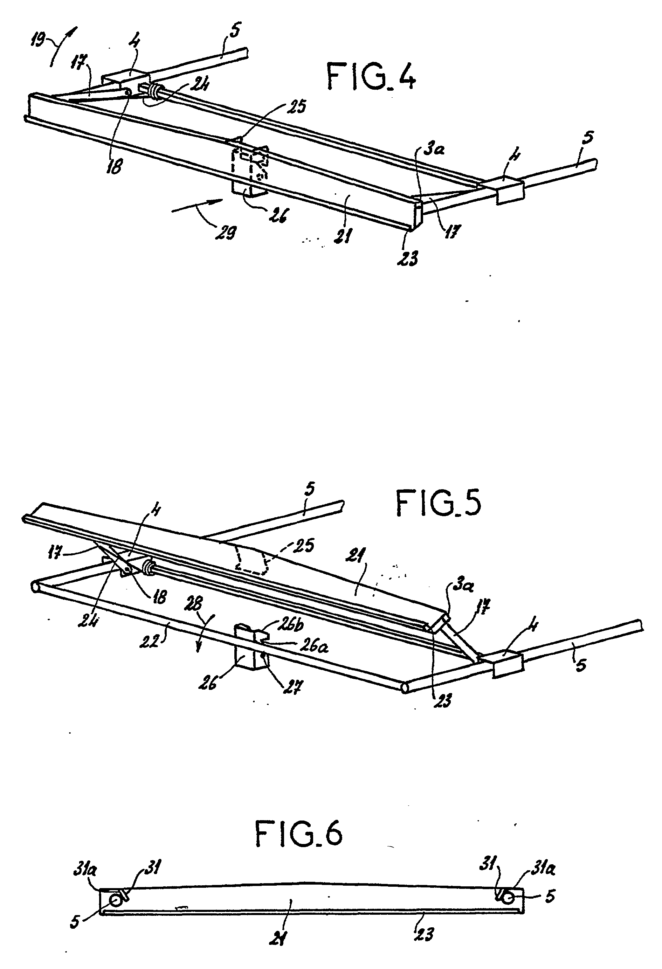

Comme le montrent plus particulièrement les figures 4 à 6, chaque extrémité de l'arceau arrière, désigné par la référence 3a puisqu'il se différencie des autres arceaux 3, est supporté par le chariot 4 qui lui est associé, par l'intermédiaire d'un bras 17 articulé sur un axe horizontal 18 coaxial à l'axe d'articulation du bras 17 supportant l'autre extrémité de cet arceau portée par le chariot 4 correspondant. Cet agencement a pour but de permettre de faire basculer l'arceau arrière 3a vers le haut en direction de l'avant de la carrosserie du véhicule sur une course angulaire de l'ordre de 90°, comme illustré par la flèche 19 de figure 4, depuis sa position basse de figure 4 jusque dans une position relevée montrée sur la figure 5. En outre, cet arceau arrière 3a porte un bandeau 21 qui, lorsque l'arceau 3 est en position abaissée, occupe lui-même une position sensiblement verticale dans laquelle il coiffe ou enveloppe la traverse arrière 22 de la carrosserie du véhicule.

Cette disposition assure donc une excellente étanchéité à l'intérieur de la carrosserie du véhicule en position de fermeture de la bâche, en évitant tout risque de pénétration d'eau.

Le bord inférieur de ce bandeau 21 est en outre avantageusement replié deux fois à 90° en direction de l'extérieur de la carrosserie du véhicule pour permettre la formation d'un canal 23 collectant les eaux de ruissellement et leur permettant de s'écouler de part et d'autre de l'arceau 3a.

Pour faciliter le maintien de l'arceau 3a tant en position normale basse que relevée de chargement, d'une part, à au moins l'un des bras 17 est associé un ressort 24 tendant constamment à le rappeler en position haute et, d'autre part, l'arceau 3a porte, de préférence en son centre, un crochet 25 apte à s'engager dans le cran 26a d'un verrou 26 en forme de levier articulé sur un axe horizontal 27 rappelé élastiquement en position verticale de verrouillage telle qu'illustrée sur les figures 4 et 5, mais susceptible d'être pivoté dans le sens de la flèche 28, à l'encontre de la force élastique de rappel précitée, pour être amené en position de déverrouillage.

Lorsque l'arceau arrière 3a est retenu par le verrou 26 en position basse comme illustrée sur la figure 4, il suffit, pour permettre son déverrouillage et son basculement en position relevée comme illustrée sur la figure 5, d'agir sur l'extrémité du verrou 26 opposée au cran 26a, dans le sens de la flèche 29, pour le faire basculer, comme indiqué précédemment, dans le sens de la flèche 28 et libérer ainsi le crochet 25 de l'arceau 3; ce dernier est donc basculé en position relevée par le ressort 24. La manoeuvre du verrou peut facilement être exécutée à l'aide d'une perche, comme en sont généralement équipés les utilisateurs de ce type de véhicule.

Pour ramener l'arceau 3a en position basse d'utilisation, il suffit d'exercer sur lui, à l'aide de la perche précitée, un effort de traction tendant à le faire pivoter dans le sens inverse de la flèche 19, jusqu'à engagement de son crochet 25 dans le cran 26a du verrou 26. La tête de ce dernier présente d'ailleurs, comme cela est connu en soi, une face inclinée 26b provoquant son basculement, dans le sens de la flèche 28, au contact du crochet 25.

La figure 6 illustre une caractéristique complémentaire intéressante des moyens de l'invention, cette caractéristique ayant pour effet d'assurer le centrage parfait de l'arceau 3a, au moins lorsqu'il arrive en position basse, ce centrage étant destiné à assurer un bon engagement du crochet 25 dans le cran 26a du verrou 26.

Dans l'exemple illustré sur la figure 6, à cet effet, l'arceau 3a porte, à chacune de ses extrémités, un gousset 31 présentant une rampe de centrage 31a. Les deux rampes 31a des deux goussets 31, qui sont de pentes inverses, sont destinées, par leur engagement sur le rail leur correspondant, à corriger tout décalage latéral éventuel de l'arceau 3a.

**Revendications**

1. Moyens de support et de guidage d'une bâche repliable pour couverture de structure mobile telle que carrosserie de véhicule utilitaire ou autre similaire, du type dans lequel la bâche est supportée par des traverses (3), en forme d'arceaux ou non, auxquelles elle est fixée par des brides rivetées ou boulonnées, dont au moins certaines sont supportées, à chacune de leurs extrémités, par un chariot (4) dont les organes de roulement sont mobiles sur un rail horizontal (5), les deux rails (5) qui supportent et guident les deux chariots (4) de chaque traverse (3) qui en est équipée, étant disposés parallèlement l'un à l'autre et à une distance l'un de l'autre correspondant à la longueur d'une traverse (3), ces rails (5) étant constitués essentiellement par un corps cylindrique de section transversale circulaire, chaque chariot (4) prévu à chaque extrémité d'une traverse (3) étant équipée d'au moins 2 jeux d'éléments de roulement disposés autour du corps cylindrique constituant le rail (5) considéré, de telle sorte que leurs plans médians soient orientés radialement par rapport au corps cylindrique (5) et décalés l'un par rapport à l'autre de manière à envelopper ce corps cylindre (5) sur un arc de cercle supérieur à 180°, chaque chariot (4) étant immobilisé en rotation par rapport à l'axe longitudinal de son rail (5) par l'engagement, sur l'autre rail (5), du chariot (4) associé de la même traverse (3), tandis que des organes auxiliaires sont éventuellement prévus pour soulever chaque pli de la bâche (2) entre chaque structure (3), lors de son repliage, caractérisés en ce que chaque corps cylindrique constituant un rail (5) est lui-même constitué par un profilé tubulaire, en ce que chaque élément de roulement de chaque chariot (4) est constitué par un galet (8 à 12), en ce que chaque jeu d'éléments de roulement de chaque chariot (4) comporte au moins, trois galets (8 à 12) et en ce qu'en outre, d'une part, chaque extrémité d'un arceau d'extrémité arrière (3a) est supportée, par le chariot (4) lui correspondant, par l'intermédiaire d'un bras articulé (17) permettant de le faire basculer vers le haut et en direction de l'avant du véhicule, sur une course angulaire de l'ordre de 90° et, d'autre part, cet arceau (3a) porte un bandeau (21) qui, lorsqu'il est en position normale abaissée, est sensiblement vertical et coiffe la traverse arrière fixe (22) de la carrosserie du véhicule.

2. Moyens selon la revendication 1, caractérisés en ce qu'il est prévu, sur chaque chariot (4), deux jeux de quatre galets (8, 9, 11, 12).

3. Moyens selon l'une quelconque des revendications précédentes, caractérisés en ce que chaque rail (5) constitue l'un des longerons supérieurs latéraux de cette structure.

4. Moyens selon la revendication 1, 2 ou 3, caractérisés en ce qu'au profilé tubulaire (5) de section circulaire transversale est associé un profilé de renfort (14) de section transversale rectangulaire aplatie, pleine ou tubulaire, fixé, par l'un de ses petits côtés et par soudure ou de toute autre manière appropriée, à la génératrice inférieure du profilé tubulaire (5) et de manière à ce que son plan médian soit orienté verticalement et radialement vers le bas par rapport au profilé tubulaire (5).

5. Moyens selon l'une quelconque des revendications précédentes, caractérisés en ce que chaque chariot (4) est constitué tout simplement par un tronçon de profilé de section transversale en U renversé (15), dont chaque aile radiale porte, sur sa face interne, un tronçon de profilé auxiliaire (16) de section transversale sensiblement en U et fixé, par son âme, à la face interne de l'aile latérale considérée du profilé (15), chaque aile latérale d'un profilé auxiliaire (16) qui est destiné à supporter les axes de deux galets se correspondant des jeux (6) et (7) de galets (8, 9, 11 et 12), formant, avec l'âme (16), l'angle correspondant à l'inclinaison désirée pour le plan médian du galet considéré par rapport au plan horizontal (13).

6. Moyens selon l'une quelconque des revendications précédentes, caractérisés en ce que, d'une part, à au moins l'un des bras articulés (17) supportant l'arceau d'extrémité arrière (3a) est associé un ressort (24) de rappel en position relevée et, d'autre part, l'arceau basculant (3a) porte, de préférence dans sa partie centrale, un crochet (25) destiné à s'engager, en position abaissée de cet arceau (3a), dans le cran (26a) d'un verrou (26) en forme de levier à rappel élastique porté par la traverse arrière fixe (22) de la structure et manoeuvrable depuis le sol, par exemple à l'aide d'une perche, pour être pivoté en position de déverrouillage.

7. Moyens selon l'une quelconque des revendications précédentes, caractérisés en ce que l'arceau basculant (3a) porte, à chacune de ses extrémités et au droit de chaque profilé tubulaire (5), un gousset (31) présentant une rampe de centrage (31a), les rampes des deux goussets étant de pentes inverses.

## Claims

1. A means for supporting and guiding a foldable awning for covering a mobile structure, such as the body of a commercial vehicle or the like, of the type in which the awning is supported by cross-members (3), which may or may not be in the shape of hoops, to which it is fixed by riveted or bolted ties, at least some of which are supported at each of their ends by a carriage (4), the rolling members of which are movable on a horizontal rail (5), the two rails (5) which support and guide the two carriages (4) of each cross-member (3) equipped therewith being arranged parallel to one another and at a distance from one another corresponding to the length of a crossmember (3), these rails (5) being essentially constituted by a cylindrical body of circular transverse crosssection, each carriage (4) provided at each end of a cross-member (3) being equipped with at least two sets of rolling elements disposed around the cylindrical body constituting the relevant rail (5), such that their median planes are oriented radially with respect to the cylindrical body (5) and offset one with respect to the other so as to cover the cylindrical body (5) over an arc of a circle greater than 180°, each carriage (4) being secured against rotation with respect to the longitudinal axis of its rail (5) by engagement, on the other rail (5), of the associated carriage (4) of the same crossmember (3), whilst auxiliary members may be provided for raising each fold of the awning (2) between each structure (3) when it is folded, characterised in that each cylindrical body constituting a rail (5) is itself constituted by a tubular section, in that each rolling element of each carriage (4) is constituted by a roller (8 to 12), in that each set of rolling elements of each carriage (4) has at least three rollers (8 to 12) and in that in addition, on the one hand, each end of a rear end hoop (3a) is supported by the carriage (4) corresponding to it by means of a pivotal arm (17) allowing it to tilt upwards and towards the front of the vehicle, over an angular path of the order of 90° and, on the other hand, this hoop (3a) carries a band (21) which, when it is in the normal lowered position, is substantially vertical and covers the rear fixed cross-member (22) of the vehicle body.

2. A means according to Claim 1, characterised in that two sets of four rollers (8, 9, 11, 12) are provided on each carriage (4).

3. A means according to either one of the preceding claims, characterised in that each rail (5) constitutes one of the upper lateral longitudinal members of this structure.

4. A means according to Claim 1, 2 or 3, characterised in that with each tubular section (5) of transverse circular cross-section is associated a reinforcing section (14) of flattened rectangular transverse cross-section, solid or tubular, fixed by one of its minor sides and by welding or any other suitable means to the lower generatrix of the tubular section (5) and in such a way that its median plane is oriented vertically and radially downwards with respect to the tubular section (5).

5. A means according to any one of the preceding claims, characterised in that each carriage (4) is constituted simply by a length of section (15) of inverted U-shaped transverse cross-section, each radial wing of which carries, on its internal face, an auxiliary length of section (16) of substantially U-shaped transverse cross-section and fixed by its central web to the internal face of the relevant lateral wing of the section (15), each lateral wing of an auxiliary profile (16) which is intended to support the shafts of two corresponding rollers of two sets (6) and (7) of rollers (8, 9, 11 and 12), forming, with the central web (16), the angle corresponding to the desired inclination of the median plane of the relevant roller with respect to the horizontal plane (13).

6. A means according to any one of the preceding claims, characterised in that, on the one hand, a spring (24) for return to the raised position is associated with at least one of the pivotal arms (17) supporting the rear end hoop (3a) and, on the other hand, the tilting hoop (3a) carries preferably in its central portion, a hook (25) intended to engage, in the lowered position of this hoop (3a), in the notch (26a) of a lock (26) in the form of a resilient return lever carried by the fixed rear cross-member (22) of the structure and operable from the ground, for example with the aid of a pole, so as to be pivoted into the unlocked position.

7. A means according to any one of the preceding claims, characterised in that the tilting hoop (3a) carries, at each of its ends and at right angles to each tubular section (5), a bracket (31) having a centring ramp (31a), the ramps of the two brackets having opposite slopes.

## Patentansprüche

1. Stütz- und führende Mittel einer faltbaren Plane zur Abdeckung einer beweglichen Anordnung, wie der Karosserie eines Nutzfahrzeuges od. dgl., bei dem die Plane von bogenförmigen oder nicht bogenförmigen Traversen (3) getragen wird, an denen sie durch angenietete oder angeschraubte Flansche fixiert ist, von denen wenigstens einige jeweils an ihren äußeren Enden von einem Wagen (4) gehalten werden, dessen Laufwerke beweglich auf einer horizontalen Schiene (5) angeordnet sind, wobei die beiden Schienen (5), die die beiden Wagen (4) jeder damit ausgerüsteten Traverse (3) tragen und führen, parallel zueinander und in einem Abstand voneinander angeordnet sind, der der Länge einer Traverse (3) entspricht, wobei diese Schienen (5) im wesentlichen aus einem zylindrischen Körper mit kreisförmigem Querschnitt bestehen, wobei jeder an jedem äußeren Ende einer Traverse (3) angeordnete Wagen (4) mit wenigstens zwei Gruppen von Laufelementen versehen ist, die um den die jeweilige Schiene (5) bildenden, zylindrischen Körper herum so angeordnet sind, daß ihre Mittelebenen bezüglich des zylindrischen Körpers (5) radial ausgerichtet und gegenseitig so versetzt sind, daß sie den zylindrischen Körper (5) in einem Kreisbogen von über 180° umgreifen, wobei jeder Wagen (4) an einer Rotation bezüglich der Längsachse seiner Schiene (5) durch Eingreifen des mit derselben Traverse (3) verbundenen Wagens (4) an der anderen Schiene (5) gehindert wird, während Hilfsmittel gegebenenfalls zum Anheben jeder Falte der Plane (2) zwischen jedem Strukturelement (3) bei ihrer Faltung vorgesehen sind, dadurch gekennzeichnet, daß jeder eine Schiene (5) bildende zylindrische Körper selbst als Rohrprofil ausgebildet ist, daß jedes Laufelement jedes Wagens (4) als Rolle (8 bis 12) ausgebildet ist, daß jede Gruppe von Laufelementen jedes Wagens (4) wenigstens drei Rollen (8 bis 12) aufweist, und daß außerdem einerseits jedes äußere Ende eines hinteren Endbogenteils (3a) von dem ihm zugeordneten Wagen (4) mittels eines schwenkbaren Arms (17) gehalten wird, der ein Verschwenken nach oben und in die vordere Richtung des Fahrzeuges über einen Winkelbereich in der Grössenordnung von 90° gestattet, und andererseits dieses Bogenteil (3a) ein bandartiges Element (21) trägt, das in seiner normalen abgesenkten Position im wesentlichen vertikal angeordnet ist und die hintere, feststehende Traverse (22) der Fahrzeugkarosserie überdeckt.

2. Mittel nach Anspruch 1, dadurch gekennzeichnet, daß an jedem Wagen (4) zwei Gruppen von vier Rollen (8, 9, 11, 12) vorgesehen sind.

3. Mittel nach einem der vorhergehender Ansprüche, dadurch gekennzeichnet, daß jede Schiene (5) einen der oberen, seitlichen Längsträger dieser Anordnung bildet.

4. Mittel nach einem der Ansprüche 1, 2 oder 3, dadurch gekennzeichnet, daß das einen kreisförmigen Querschnitt aufweisende Rohrprofil mit einem einen rechteckigen, abgeflachten, massiven oder rohrförmigen Querschnitt aufweisende Verstärkungsprofil (14) verbunden ist, das mit einer seiner kurzen Seiten und durch eine Schweißverbindung oder durch jede andere geeignete Weise an der unteren Mantellinie des Rohrprofils (5) so fixiert ist, daß seine Mittelebene vertikal und radial an der Unterseite zum Rohrprofil (5) ausgerichtet ist.

5. Mittel nach einem der vorhergehenden Ansprüche, dadurch gekennzeichnet, daß jeder Wagen (4) auf ganz einfache Weise als Profilstück mit umgekehrtem U-förmigem Querschnitt (15) ausgebildet ist, von dem jeder radiale Schenkel an seiner Innenseite ein Hilfsprofilstück (16) mit im wesentlichen U-förmigem Querschnitt trägt, das mit seinem Steg in der Innenseite des betreffenden seitlichen Schenkels des Profilstückes (15) fixiert ist, wobei jeder seitliche Schenkel eines Hilfsprofilstücks (16), der zum Halten der Achsen der beiden Rollen vorgesehen ist, die den Gruppen (6) und (7) von Rollen (8, 9, 11 und 12) entsprechen, mit dem Steg (16) einen Winkel bildet, der der gewünschten Neigung für die Mittelebene der betreffenden Rolle im Hinblick auf die Horizontalebene (13) entspricht.

6. Mittel nach einem der vorhergehenden Ansprüche, dadurch gekennzeichnet, daß einerseits eine Rückstellfeder (24) für die angehobene Position mit wenigstens einem der schwenkbaren Arme (17) verbunden ist, die daß hintere Endbogenteil (3a) tragen, und daß andererseits das schwenkbare Bogenteil (3a) vorzugsweise an seinem mittleren Bereich einen Haken (25) trägt, der in der abgesenkten Position dieses Bogenteiles (3a) zum Eingriff in das Rastelement (26a) eines Riegels (26) in Form eines Hebels mit elastischer Rückstellung vorgesehen ist, der von der hinteren feststehenden Traverse (22) der Anordnung getragen und vom Boden aus betätigbar ist, z.B. mittels einer Stange, um in die Freigabeposition geschwenkt zu werden.

7. Mittel nach einem der vorhergehenden Ansprüche, dadurch gekennzeichnet, daß das schwenkbare Bogenteil (3a) an jedem seiner Enden und im Bereich jedes Rohrprofils (5) ein Schrägstück (31) trägt, das eine Zentrierrampe (31a) darstellt, wobei die Rampen der beiden Schrägstücke inverse Neigungen aufweisen.

**FIG.1**

**FIG.2**

**FIG.3**

FIG.4

FIG.5

FIG.6